# EUROPEAN PATENT APPLICATION

(11) **EP 4 640 556 A1**
(43) Date of publication of application: **29.10.2025**
(21) Application number: 24171830.3
(22) Date of filing: 23.04.2024
(51) Int. Cl.: B64D 11/00, A47B 31/06, B64D 11/04

(54) **PUSH BUTTON RETAINERS FOR GALLEY COMPARTMENTS**

(71) Applicant: B/E Aerospace Inc., Winston Salem, NC 27105 (US)
(72) Inventor: VELASQUEZ, Zeus Mendoza, San Pascual (PH); ALVAREZ, Charles Jovan Hernan, Bacnotan (PH); ACOJEDO, Susie Jean Ganancial, Malvar (PH)
(74) Representative: Dehns

(57) **Abstract**

A push button retainer for locking or unlocking an aircraft galley container to an aircraft galley compartment comprises a first locking means configured to lock or unlock said container to said compartment, a second locking means comprising a first turn button 8a, wherein said first turn button 8a is configured to rotate between an unlocked position and a locked position. The retainer further comprises a push button 4 configured, when pressed, or de-pressed,, to either: simultaneously lock said first locking means 5 and rotate said first turn button 8a to thereby also lock said second locking means, or, simultaneously unlock said first locking means 5 and rotate said first turn button 8a to thereby also unlock said second locking means.

## Description

### FIELD

The examples disclosed herein relate to retainers for galley compartments.

### BACKGROUND

Known systems or methods for securing galley containers/trolleys in a trolley compartment of an aircraft use both left and right turn buttons and an intermediate retainer. These are utilized separately to secure the containers/trolleys within the galley compartments. The turn buttons are used to secure trolleys and galley containers within the galley/trolley compartment and the intermediate retainer is used as an additional stopper and to hold the position of the trolleys within the compartment. Due to the fact that the existing retainers and turn buttons are utilized separately to fulfil their purpose, two to three movements are required to lock and secure the trolleys in the compartment.

Drawbacks with the existing systems and methods can be that the retainers are often stiff to move to lock and unlock the trolleys. Also, the space in between the turn buttons and the intermediate retainer pin is too small to be turned by hand, making it difficult to move. The fact that the traditional systems require both a left and right turn button, also increases the complexity of the system and the manufacture of its parts, as these buttons are not identical in shape (and are often formed as mirror-imaged shapes of each other). This also results in a more complex installation of the left and right turn buttons, often resulting in parts (such as washers) on the assembly colliding or missing. Since the shapes of the parts of the known systems differ, the retainers and the left and right turn buttons must all be manufactured and installed in separate assembly lines, i.e. the retainers are installed in the P4 assembly line, while the turn buttons are installed in the P5 assembly line.

Another problem with known turn buttons is their ability to return to their original vertical position at 90 degree after being tested to move in the opposite direction. In terms of process improvement, currently the retainers and turn buttons are installed separately within the galley assembly, as mentioned above.

The examples described herein thereby aim to overcome these drawbacks and provide an improved retainer to lock or unlock the galley container in the galley compartment.

### SUMMARY

According to a first aspect, a push button retainer is provided for locking or unlocking an aircraft galley container to an aircraft galley compartment. The push button retainer comprises a first locking means configured to lock or unlock said container to said compartment, a second locking means comprising a first turn button. The first turn button is configured to rotate between an unlocked position and a locked position. The push button retainer further comprises a push button configured, when pressed, or de-pressed, to either: simultaneously lock said first locking means and rotate said first turn button to thereby also lock said second locking means, or simultaneously unlock said first locking means and rotate said first turn button to thereby also unlock said second locking means. Advantageously, the push button retainer enables easy locking or unlocking of the galley container to/from the galley compartment. The term turn button may be defined as a button that rotates about its axis to enable a positive lock until turned again to release. The turn button may also be known as a turn handle.

The second locking means optionally comprises a second turn button, wherein said second turn button is configured to rotate between an unlocked position and a locked position. The push button is configured to, when pressed, or de-pressed, also rotate said second turn button to thereby simultaneously lock or unlock said second locking means. The first turn button and the second turn button may be identical. By providing identical turn buttons, there is no need to distinguish between the left and right turn buttons. The provision of the two turn buttons in the second locking means is advantageously similar to the known retainer.

The first turn button and/or the second turn button lock said container in said compartment by blocking axial movement of said container out of an opening of said compartment. Therefore, it is advantageous to hold the galley container securely inside the galley compartment.

The push button is connected to a first gear. The first gear is configured to rotate 90 degrees in both a clockwise and anti-clockwise direction, when said push button is pressed, or de-pressed.

The first turn button is connected to a second gear. When, in use, said second gear engages with said first gear.

The second gear can be configured, when said push button is pressed, to rotate 90 degrees in a clockwise and anti-clockwise direction.

When the push button is pressed, or de-pressed, to lock the galley container in the galley compartment, said first gear rotates anti-clockwise and said second gear rotates clockwise.

When the push button is pressed, or de-pressed, to unlock the galley container from the galley compartment, said first gear rotates anti-clockwise and said second gear rotates clockwise.

Advantageously, when the push button is pressed, or de-pressed, the synchronised movements of the first gear and the second gear lock/unlock the galley container in the galley compartment.

The second turn button may be provided with a third gear and said third gear is configured to rotate 90 degrees in both a clockwise and an anti-clockwise direction.

A connecting gear is configured to rotate 90 degrees in both a clockwise and anti-clockwise direction, and said connecting gear engages with said first gear and said third gear.

Advantageously, when the push button is pressed, or de-pressed, the synchronised movements of the first gear, the second gear, the connecting gear, and the third gear lock/unlock the galley container in the galley compartment.

The rotation of the first turn button and/or the second turn button is translated into lateral movement through the second gear and/or third gear, respectively. Advantageously, the 90-degree movement of the gears prevents any unwanted additional movement of the turn buttons.

When the push button is pressed, or de-pressed, to lock the galley container in the galley compartment, said second gear and said connecting gear are configured to rotate clockwise and said first gear and said third gear are configured to rotate anti-clockwise; or when the push button is pressed, or de-pressed, to unlock the galley container in the galley compartment, said second gear and said connecting gear are configured to rotate anti-clockwise and said first gear and said third gear are configured to rotate clockwise.

The first locking means includes a retrievable latch, and optionally wherein said first locking means includes a rod configured to lock or unlock said retrievable latch; and wherein said rod is positioned between said push button and the retrievable latch.

The push button retainer further comprises a spring and preferably the spring is covered by a spring cover. Advantageously, the spring provides an initial movement to drive the bearing to perform a rotational movement to move the turn buttons. Advantageously, the spring cover protects the spring from dust and extends its life. The push button retainer further comprises a bearing, which acts as a guide for the relative rotation of the first locking means.

The first gear, the second gear, the third gear or the connecting gear may be a spur gear. Other types of gear, such as a helical gear or a bevel gear, may be used. All these gears may be housed in a case. Preferably, the push button is housed in the case. The housing case may advantageously protect the gears and optionally the push button. It is also advantageous that the case ensures a compact unit suitable for installation in limited spaces.

The push button retainer of the disclosure can be advantageously assembled in a single assembly line therefore, thus avoiding unnecessary missing parts or misalignments.

According to a second aspect, a galley cart securing system is provided. The system comprises a galley container and a galley compartment configured to receive the galley container. The push button retainer according to the first aspect is provided, to lock or unlock the galley container to/from the galley compartment.

According to a third aspect, a method is provided for locking or unlocking an aircraft galley container to an aircraft galley compartment. The method comprises providing a first locking means configured to lock said container to said compartment, providing a second locking means comprising a first turn button, wherein said first turn button is configured to rotate between an unlocked position and a locked position. The method further comprises providing a push button configured to, when pressed, or de-pressed, either: simultaneously lock said first locking means and rotate said first turn button to thereby lock said second locking means or, when pressed, or de-pressed, to simultaneously unlock said first locking means and rotate said first turn button to thereby unlock said second locking means, the method comprising the step of: pressing, or de-pressing said push button to simultaneously lock or unlock said first locking means and said second locking means.

According to the method the second locking means further comprises a second turn button, wherein said second turn button is configured to rotate between an unlocked position and a locked position, and wherein said push button is configured to, when pressed, or de-pressed, also rotate said second turn button to thereby lock or unlock said second locking means.

### BRIEF DESCRIPTION OF THE DRAWINGS

Figure 1 a-d show a retainer for galley compartments of prior art.
Figure 2 shows a push button retainer for galley compartments.
Figure 3 shows a gear train of a push button retainer for galley compartments.
Figure 4 shows an exploded view of the push button retainer.
Figure 5a and 5b show two-dimensional schematics of the push button retainer.
Figure 6 a-d show the steps of operating the push button retainer.

### DETAILED DESCRIPTION

The examples described herein provide an improved push button retainer for locking or unlocking an aircraft galley container to an aircraft galley compartment, as well as a corresponding method for locking or unlocking an aircraft galley container to an aircraft galley compartment.

Known trolley compartments use both turn buttons and an intermediate retainer which are manufactured as separate and individual components and which are operated separately to secure trolleys within the compartment of an aircraft. The turn buttons are used to restrain the trolleys within the trolley compartment or bay and the intermediate retainer is used as an additional stopper and to hold the position of the trolley in the trolley compartment. This means that two to three movements are needed to complete the overall locking mechanism.

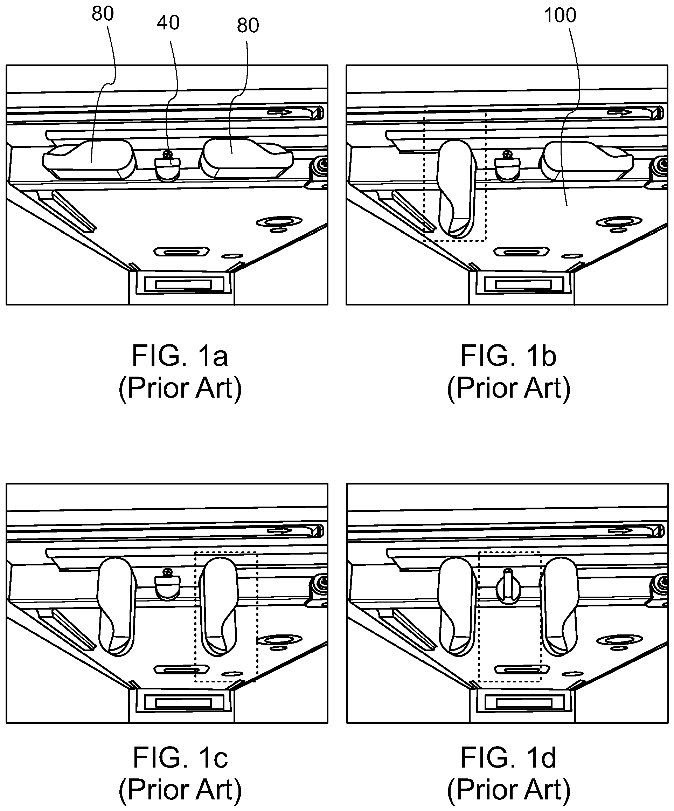

Figures 1a-d show a retainer for aircraft galley compartments of the prior art. Figure 1a shows the relative positions of the two turn buttons 80 and the intermediate retainer 40 without a trolley in the galley compartment. The existing retainer 40 and the turn buttons 80 are used separately to provide their purpose. In other words, two to three movements are required to complete the locking or unlocking of the trolleys. A first step to secure the locked in position of the trolley in the container is shown in Figure 1b, which shows that one of the buttons 80 is turned by a user by 90 degrees. A second step is shown in Figure 1c, that shows that the other turn button 80 is turned by 90 degrees in the opposite direction. In a third step shown in Figure 1d, the intermediate retainer 40 is rotated 90 degrees. One of the problems encountered with the intermediate retainer 40 of the prior art is the stiffness of moving the retainer 40 between the locked and unlocked positions. In addition, the intermediate retainer 40 is a component comprising a pin or button that is quite small, which makes it harder to move. The turn buttons 80 lose their capability to return to their original positions over time. Further, these known retainers 40 and turn buttons 80 are manufactured on two different assembly lines, e.g. the retainers are assembled on P4 assembly line whilst the turn buttons are installed in the P5 assembly line.

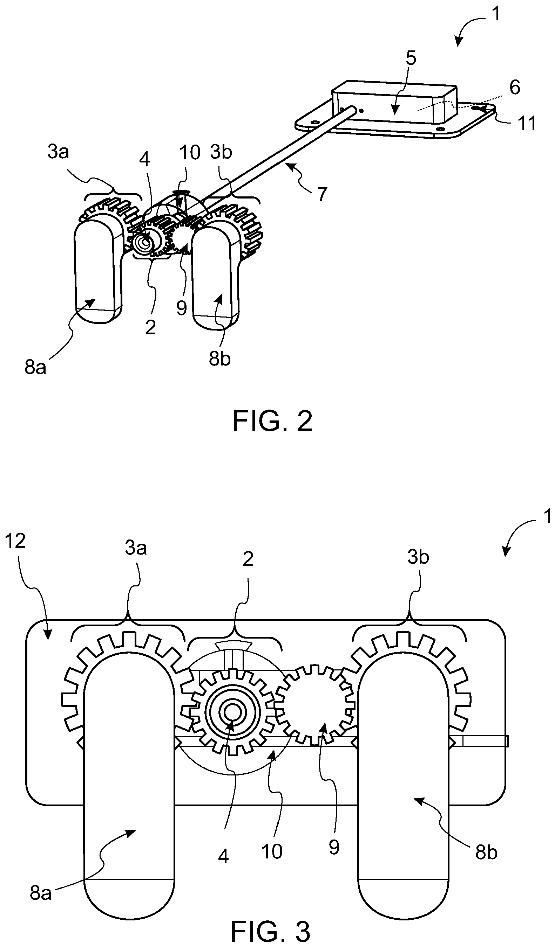

Figure 2 shows a new type of retainer 1 for galley compartments of an aircraft according to the first aspect of the present disclosure. The retainer 1 of the example shown in figure 2 comprises first and second turn buttons 8a, 8b, which, in some examples and if desired, may be manufactured so as to look similar, from the exterior of the trolley, to the user, to those, 80, described above with reference to figures 1a to d. Of course, other shapes may be used, depending on the aesthetic desires of the consumer. The retainer 1 further comprises an intermediate retainer, which comprises a push button 4. This push button 4 therefore replaces the intermediate retainer 40 as discussed above with reference to figures 1a to 1d.

The retaining system may comprise a plurality of locking means that work together to lock and retain the trolley in place, or unlock the trolley from the compartment, via the use of a single push of the push button 4.

That is, the retaining system may comprise a first locking means 5, connected to the push button 4, that is configured to lock or unlock said trolley to said compartment. A second locking means is also provided that comprises a first turn button 8a. The first turn button 8a is configured to rotate between an unlocked position and a locked, retaining, position. The retainer further comprises a push button 4, that is configured, when pressed, or de-pressed,, to either simultaneously lock said first locking means 5 and rotate said first turn button 8a to thereby also lock said second locking means or simultaneously unlock said first locking means 5 and rotate said first turn button 8a to thereby also unlock said second locking means.

Although in some examples, only the first turn button 8a may be used alone in combination with the first locking means 5, in preferred examples, the second locking means may further include a second turn button 8b. For example, figure. 2 shows two turn buttons 8a and 8b, yet the retainer 1 can also perform the retaining function with just one turn button.

The second turn button 8b may be configured to rotate between an unlocked position and a locked position, wherein the trolley is retained in the compartment. The push button 4 is configured to, when pressed, or de-pressed,, also rotate the second turn button 8b to thereby simultaneously lock or unlock said second locking means 8b.ln some examples, both turn buttons 8a, 8b, may be manufactured such that they are identical in shape and operation, thereby simplifying the manufacture and assembly process and preventing any possibility of incorrect assembly due to differences between the buttons.

The first turn button 8a and/or second turn button 8b are configured to lock the trolley/container in the compartment by blocking axial movement of the container out of an opening of the compartment 100.

The operation of the different locking components of the system will now be described in more detail. As can be seen in figure 2, the push button 4 is connected to a first gear 2. The first gear 2 is configured to rotate 90 degrees in both a clockwise and anti-clockwise direction, when said push button 4 is pressed or de-pressed.

The first turn button 8a is connected to a second gear 3a. When, in use, the second gear 3a engages with the first gear 2. The second gear 3a is configured, when the push button 4 is pressed, or de-pressed,, to rotate 90 degrees in either a clockwise or an anti-clockwise direction. The second turn button 8b is provided with a third gear 3b. The third gear 3b is configured to rotate 90 degrees in either a clockwise and anti-clockwise direction.

The retainer 1 further comprises a connecting gear 9 configured to rotate 90 degrees in either a clockwise and anti-clockwise direction. When in use, the connecting gear 9 engages with the first gear 2 and the third gear 3b. In one example, when the push button 4 is pressed, or de-pressed, to lock the trolley 100 in the galley compartment, the second gear 3a and the connecting gear 9 are configured to rotate clockwise and the first gear 2 and said third gear 3b are configured to rotate anti-clockwise.

Alternatively, when the push button 4 is pressed, or de-pressed, to unlock the trolley 100 in the galley compartment, the second gear 3a and the connecting gear 9 are configured to rotate anti-clockwise and the first gear 2 and said third gear 3b are configured to rotate clockwise.

When the push button 4 is pressed, or de-pressed,, the first gear 2 rotates anti-clockwise, causing the connecting gear 9 to rotate clockwise and the third gear 3b to rotate anti-clockwise. When the push button 4 is pressed, or de-pressed,, the first gear 2 rotates clockwise, causing the connecting gear 9 and the third gear 3b to rotate clockwise. Depressing the push button 4 means pressing it after the first synchronised movement or releasing it to perform a reverse action.

The first locking means 5 includes a retrievable latch 6. Optionally the first locking means 5 includes a rod 7 configured to lock or unlock said retrievable latch 6. The rod 7 is positioned between said push button 4 and retrievable latch 6.

Figure 3 shows a gear train of the push button retainer 1. In this case, the gear train includes the first gear 2, the second gear 3a, the third gear 3b, and the connecting gear 9. However, the gear train could only be formed by the first gear 2 and the second gear 3a to produce a fully functional retainer 1. The gear train is provided within a case 12. Optionally the case 12 may also house the push button 4. The housing case may protect the gears and/or the push button 4. Further advantageously, the case ensures a compact unit suitable for installation in a limited space. The case may be formed from lightweight material such as aluminium alloy in order to reduce the weight and cost.

Advantageously, the push button retainer provides an integrated solution that streamlines the use of the intermediate retainer and the turn buttons within the trolley compartment. This retainer offers a single push button that orchestrates a synchronised movement: as the turn buttons and retainer are interlocked by precision gears.

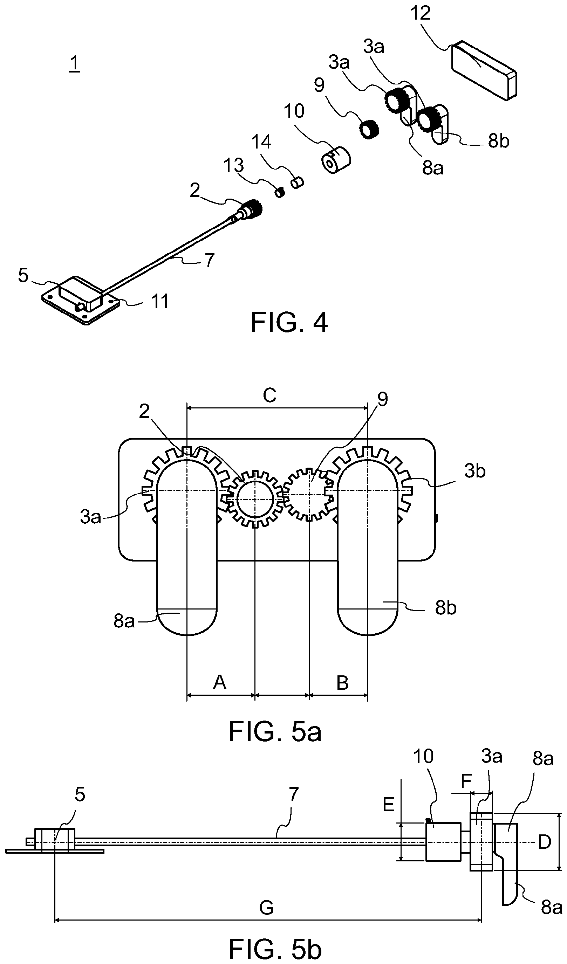

Figure 4 shows an exploded view of the retainer 1 in use. In Figure 4, the locking means 5 is positioned in an unlocked state within the housing. Fixing means 11, such as screw or rivet holes in the locking means 5 are provided to affix the locking means 5 to the gallery compartment's panel. Therefore, the locking means 5 may be fixed onto the panel by screws or rivets. In addition to the parts mentioned in Figures 2 and 3, Figure 4 shows a rod 7 connecting the locking means 5 and the push button 4.

Figure 4 also shows a spring 13 that will be in contact with the first gear 2 and optionally collaborating with a bearing 10. The spring 13 may be provided with a spring cover 14 for protecting it from dust.

Figures 5a and 5b show an exemplary dimension of the push button retainer 1. The dimensions shown in these figures are only examples and they can vary depending on the galley compartment size. Figure 5a shows a cross-sectional view of the gear train along with the dimensions. For example, the dimensions A to G may vary depending on galley compartment size.

Figure 5b shows a longitudinal view of the push button retainer 1 along with the dimensions. As an example, the length of the rod 7 is 386.1 mm, the diameter of the bearing 10 is 34.8 mm, the width of the first gear 3a (or second gear 3b) is 20 mm and the diameter of the first gear 3a (or second gear 3b) is 51.89 mm.

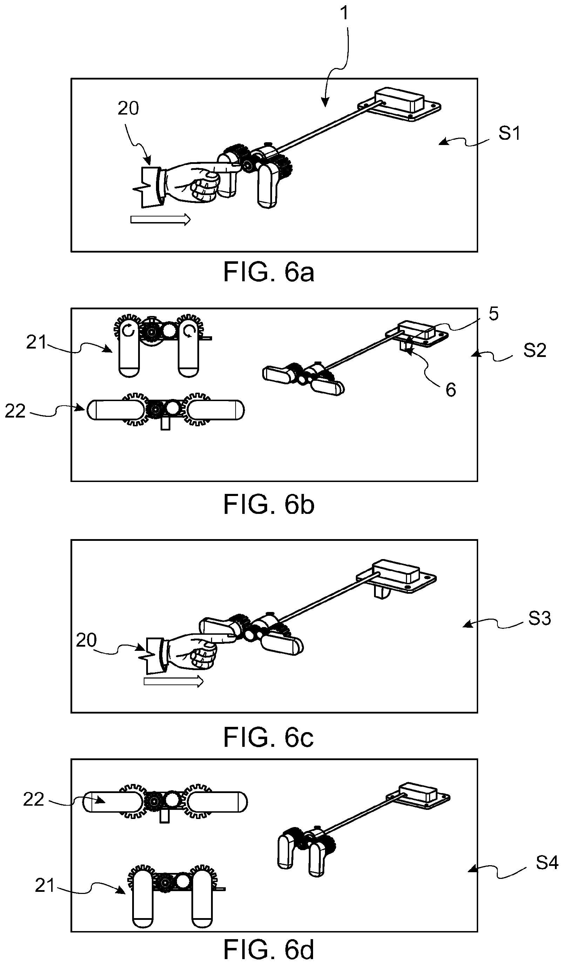

Figure 6 shows the steps of a method of locking or unlocking a galley container to/from a galley compartment. A method comprising providing a first locking means 5 configured to lock said container to said compartment, providing a second locking means comprising a first turn button 8a. The first turn button 8a is configured to rotate between an unlocked position and a locked position. The method comprises providing a push button 4 configured to, when pressed, or de-pressed,, either: simultaneously lock said first locking means 5 and rotate said first turn button 8a to thereby lock said second locking means or, when pressed, or de-pressed,, to simultaneously unlock said first locking means 5 and rotate said first turn button 8a to thereby unlock said second locking means. The method further comprises the steps of: pressing said push button 4 to simultaneously lock or unlock said first locking means 5 and said second locking means. The second locking means further comprises a second turn button 8b. The second turn button 8b is configured to rotate between an unlocked position and a locked position, and wherein said push button 4 is configured to, when pressed, or de-pressed,, also rotate said second turn button 8b to thereby lock or unlock said second locking means.

Figure 6a depicts the retainer 1 in the unlocked position. Figure 6a shows a step S1 in which a user 20 presses the push button 4 to simultaneously lock the first locking means 5 and the second locking means. In a step S2, the second gear 3a and the connecting gear 9 rotate clockwise and the first gear 2 and the third gear 3b rotate anti clockwise. Thereby, the retrievable latch 6 is extended to lock the galley container to the galley compartment.

Figure 6c shows a step S3 in which the user 20 presses the push button 4 to unlock simultaneously the first locking means 5 and the second locking means. In a step S4, the second gear 3a and the connecting gear 9 rotate anti clockwise and the first gear 2 and the third gear 3b rotate clockwise. Thereby, the retrievable latch 6 is retrieved back to unlock the galley container from the galley compartment. Figure 6d depicts the retainer 1 in the unlocked position.

One of the key advantages of the push button retainer is provide a single operation locking or opening mechanism. Further, eliminate stiffness encountered during retainer usages. In order to secure or release the galley cart or container, the user may just push the push button 4. The gear train ensures the secure positioning of the turn buttons, effectively controlling their movement and preventing unintended additional movement.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A push button retainer (1) for locking or unlocking an aircraft galley container (100) to an aircraft galley compartment, comprising a first locking means (5) configured to lock or unlock said container to said compartment,
a second locking means comprising a first turn button (8a), wherein said first turn button (8a) is configured to rotate between an unlocked position and a locked position, and further comprising:
a push button (4) configured, when pressed, or de-pressed,, to either:
simultaneously lock said first locking means (5) and rotate said first turn button (8a) to thereby also lock said second locking means,
or,
simultaneously unlock said first locking means (5) and rotate said first turn button (8a) to thereby also unlock said second locking means.

2. The push button retainer (1) of claim 1, wherein said second locking means further comprises a second turn button (8b), wherein said second turn button (8b) is configured to rotate between an unlocked position and a locked position, and wherein said push button (4) is configured to, when pressed, or de-pressed,, also rotate said second turn button (8b) to thereby simultaneously lock or unlock said second locking means (8b).

3. The push button retainer (1) of claim 1 or 2, wherein said first turn button (8a) and/or said second turn button (8b) lock said container in said compartment by blocking axial movement of said container (100) out of an opening of said compartment.

4. The push button retainer (1) of any of claim 1 to 3, wherein said push button (4) is connected to a first gear (2); and
wherein said first gear (2) is configured to rotate 90 degrees in both a clockwise and anti-clockwise direction, when said push button (6) is pressed or de-pressed.

5. The push button retainer (1) of any of claim 1 to 4, wherein said first turn button (8a) is connected to a second gear (3a);
and wherein, in use, said second gear (3a) engages with said first gear (2).

6. The push button retainer (1) of claim 5, wherein said second gear (3a) is configured, when said push button (4) is pressed or de-pressed, to rotate 90 degrees in a clockwise and anti-clockwise direction.

7. The push button retainer (1) of any of claim 1 to 6, wherein, when the push button (4) is pressed, or de-pressed, to lock the galley container (100) in the galley compartment, said first gear (2) rotates anti-clockwise and said second gear (3a) rotates clockwise.

8. The push button retainer (1) of any of claims 1 to 7,
wherein, when the push button (4) is de-pressed to unlock the galley container (100) from the galley compartment, said first gear (2) rotates anti-clockwise and said second gear (3a) rotates clockwise.

9. The push button retainer (1) of any of claim 2 to 8,
wherein said second turn button (8b) is provided with a third gear (3b); and
wherein said third gear (3b) is configured to rotate 90 degrees in both a clockwise and anti-clockwise direction.

10. The push button retainer (1) of claim 9, further comprising a connecting gear (9) configured to rotate 90 degrees in both a clockwise and anti-clockwise direction, and
wherein said connecting gear (9) engages with said first gear (2) and said third gear (3b).

11. The push button retainer (1) of claim 9 or 10, wherein, when the push button (4) is pressed, or de-pressed, to lock the galley container (100) in the galley compartment, said second gear (3a) and said connecting gear (9) are configured to rotate clockwise and said first gear (2) and said third gear (3b) are configured to rotate anti-clockwise; or
wherein, when the push button (4) is pressed, or de-pressed, to unlock the galley container (100) in the galley compartment, said second gear (3a) and said connecting gear (9) are configured to rotate anti-clockwise and said first gear (2) and said third gear (3b) are configured to rotate clockwise.

12. The push button retainer (1) of any preceding claim, wherein said first locking means (5) includes a retrievable latch (6), and optionally wherein said first locking means (5) includes a rod configured to lock or unlock said retrievable latch; and wherein said rod is positioned between said push button (4) and retrievable latch (6).

13. A galley cart securing system, comprising:
a galley container (100),
a galley compartment configured to receive the galley container (100);
said push button retainer (1) according to any preceding claim, to lock or
unlock the galley container (100) to the galley compartment.

14. A method for locking or unlocking an aircraft galley container (100) to an aircraft galley compartment, comprising
providing a first locking means (5) configured to lock said container to said compartment,
providing a second locking means comprising a first turn button (8a), wherein said first turn button (8a) is configured to rotate between an unlocked position and a locked position, and further comprising:
providing a push button (4) configured to, when pressed or de-pressed, either:
simultaneously lock said first locking means (5) and rotate said first turn button (8a) to thereby lock said second locking means.
or, when pressed or de-pressed,
to simultaneously unlock said first locking means (5) and rotate said first turn button (8a) to thereby unlock said second locking means, the method comprising the steps of:
pressing said push button (4) to simultaneously lock or unlock said first locking means (5) and said second locking means.

15. The method of claim 14,
wherein said second locking means further comprises a second turn button (8b), wherein said second turn button (8b) is configured to rotate between an unlocked position and a locked position, and wherein said push button (4) is configured to, when pressed or de-pressed, also rotate said second turn button (8b) to thereby lock or unlock said second locking means.
